# EUROPEAN PATENT APPLICATION

(11) **EP 4 461 451 A1**
(43) Date of publication of application: **13.11.2024**
(21) Application number: 22927028.5
(22) Date of filing: 16.02.2022
(51) Int. Cl.: B23H 7/02

(54) **WIRE ELECTRIC DISCHARGE MACHINING DEVICE**

(71) Applicant: FANUC CORPORATION, Oshino-mura Minamitsuru-gun Yamanashi 401-0597 (JP)
(72) Inventor: KOUDA, Hisanori, Minamitsuru-gun, Yamanashi 401-0597 (JP)
(74) Representative: Keil & Schaafhausen Patentanwälte PartGmbB
(86) International application number: PCT/JP2022/006177
(87) International publication number: WO 2023/157125

(57) **Abstract**

A wire electric discharge machining device (10) comprises: a hollow arm (22) that passes through a machining vessel (12) and guides a wire electrode (24) to the outside of the machining vessel (12); a driving mechanism (14) that changes the relative positions of the machining vessel (12) and the arm (22) at least in the direction of extension of the arm (22); a machining fluid inlet (38) that is formed in a first section (30) of the arm (22) positioned inside the machining vessel (12) regardless of the relative positions thereof; and a machining fluid outlet (40) that is formed in a second section (32) of the arm (22) positioned outside the machining vessel (12) regardless of the relative positions thereof.

## Description

### TECHNICAL FIELD

The present invention relates to a wire electrical discharge machine (wire electric discharge machining device).

### BACKGROUND ART

The wire electrical discharge machine disclosed in JP H03-008892 B2 includes a work pan and an arm. The work pan stores a working fluid (machining liquid). Further, a voltage is applied to the inter-electrode gap between a wire electrode and a workpiece in the working fluid stored in the work pan.

The arm penetrates into the work pan. Therefore, a part of the arm is immersed in the working fluid within the work pan. The wire electrode is passed through the inside of the arm.

### SUMMARY OF THE INVENTION

The proportion of the portion of the arm that is immersed in the working fluid changes in accordance with change in the relative positional relationship between the arm and the work pan. Here, the temperature of the working fluid in the work pan rises due to electric discharge generated in the work pan.

The portion of the arm immersed in the working fluid within the work pan expands in response to a high temperature of the working fluid. This expansion causes the length of the arm to change. That is, the length of the arm varies depending on the length of the portion of the arm that is immersed in the working fluid.

There is a problem that the machining accuracy deteriorates due to the variation in the length of the arm during the execution of electrical discharge machining.

The present invention has the object of solving the aforementioned problem.

An aspect of the present invention is characterized by a wire electrical discharge machine for machining a workpiece by generating electric discharge between the workpiece and a wire electrode in a working fluid, the wire electrical discharge machine including: a work pan configured to store the working fluid and accommodate the workpiece; an arm having a hollow shape and that penetrates into the work pan, wherein the wire electrode is passed through the arm in order for the wire electrode that has passed through the workpiece to be guided to an outside of the work pan; a drive mechanism configured to change a relative positional relationship between the work pan and the arm at least in an extending direction of the arm; a working fluid introduction port formed in a first portion of the arm, the first portion being positioned inside the work pan regardless of change in the relative positional relationship in the extending direction, the working fluid introduction port being configured to guide the working fluid to an inside of the arm; and a working fluid discharge port formed in a second portion of the arm, the second portion being positioned outside the work pan regardless of change in the relative positional relationship in the extending direction, the working fluid discharge port being configured to discharge, to an outside of the arm, the working fluid that has entered from the working fluid introduction port.

According to the present invention, the temperature of the entire arm is controlled in accordance with the liquid temperature of the working fluid in the work pan, and therefore, the length of the arm is prevented from varying during electrical discharge machining.

### BRIEF DESCRIPTION OF DRAWINGS

FIG. 1 is a configuration diagram of a wire electrical discharge machine according to an embodiment;
FIG. 2 is a view showing the wire electrical discharge machine when the work pan is moved to a position different from that in FIG. 1 by the driving of a drive mechanism;
FIG. 3 is a schematic view showing the structure of the wire electrical discharge machine related to an arm; and
FIG. 4A is a configuration diagram of a wire electrical discharge machine according to a first modification, and FIG. 4B is a diagram showing the flow of fluid when a second valve is opened.

### DETAILED DESCRIPTION OF THE INVENTION

### [Embodiment]

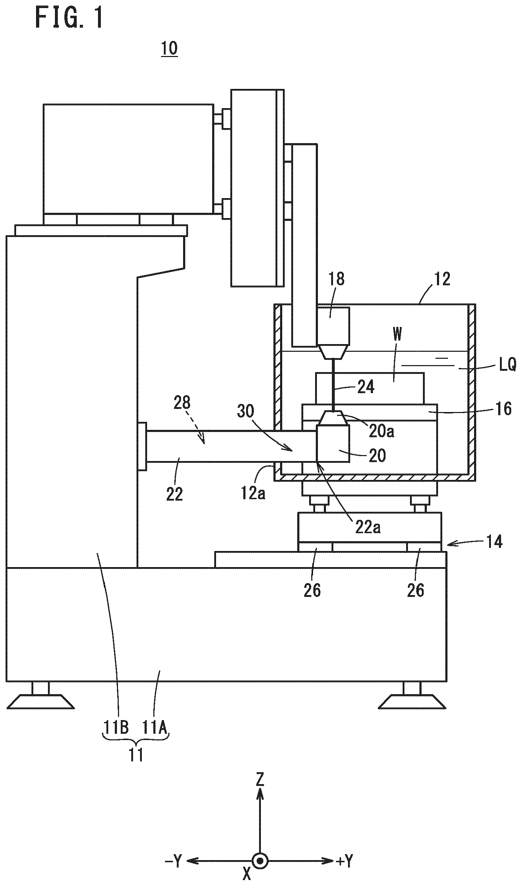

FIG. 1 is a configuration diagram of a wire electrical discharge machine 10 according to an embodiment.

Note that FIG. 1 shows not only the wire electrical discharge machine 10 but also an X direction, a Y (+Y, -Y) direction, and a Z direction. The X direction is parallel to a horizontal plane. The Y direction is also parallel to the horizontal plane. However, the Y direction is orthogonal to the X direction. The Z direction indicates an upward direction. The Z direction is orthogonal to the horizontal plane.

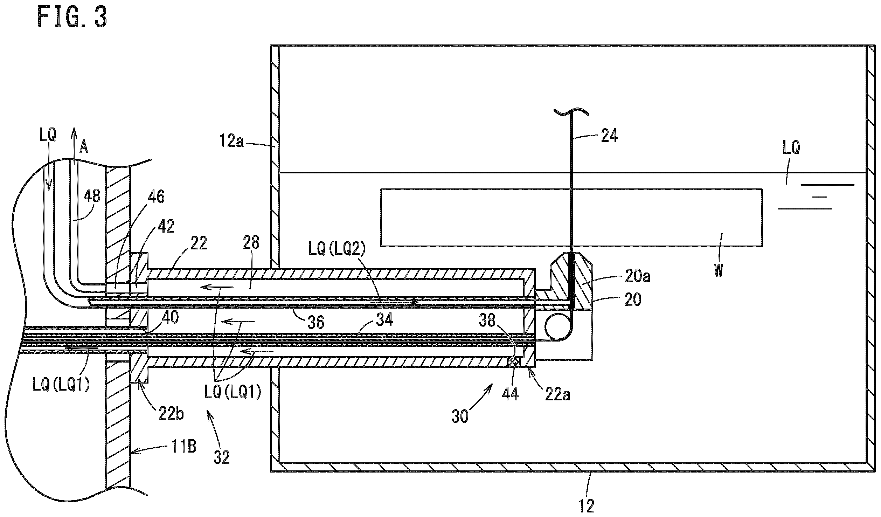

The wire electrical discharge machine 10 includes a support portion 11, a work pan 12, a drive mechanism 14, a table 16, an upper guide block 18, a lower guide block 20, an arm 22, and a wire electrode 24. An inside 28 of the arm 22 is hollow (see also FIG. 3). The longitudinal direction (extending direction) of the arm 22 is the Y direction.

The support portion 11 includes a bed 11A and a column 11B. The bed 11A is installed on an installation surface such as a floor of a factory. The column 11B is installed vertically on the bed 11A.

The work pan 12 is disposed, together with the drive mechanism 14, at a position in the +Y direction relative to the column 11B. The work pan 12 stores a working fluid (machining liquid) LQ. The work pan 12 is supported by the drive mechanism 14.

The drive mechanism 14 is installed on the bed 11A. The drive mechanism 14 includes a slider 26 that supports the work pan 12. The slider 26 can slide in the X direction and the Y direction. Therefore, the drive mechanism 14 can move the work pan 12 in the Y direction, for example, in accordance with the movement of the slider 26. The slider 26 slides in response to, for example, the driving of a servo motor.

In FIG. 1, the slider 26 is located at the most +Y direction-side position within the movement range of the slider 26.

The table 16 is immersed in a dielectric working fluid LQ in the work pan 12. When the work pan 12 is moved by the drive mechanism 14, the table 16 also moves together with the work pan 12.

The table 16 supports a workpiece W in the work pan 12. The workpiece W supported on the table 16 is also immersed in the working fluid LQ in the work pan 12.

The upper guide block 18 is supported by the column 11B and is disposed above the workpiece W. The upper guide block 18 guides the wire electrode 24 to the workpiece W while supporting the wire electrode 24.

A voltage is applied between the wire electrode 24 fed to the workpiece W and the workpiece W. Consequently, an electric discharge is generated between the wire electrode 24 and the workpiece W. The workpiece W is machined in accordance with the electric discharge.

The lower guide block 20 is immersed in the working fluid LQ below the workpiece W. The lower guide block 20 guides the wire electrode 24 that has passed through the workpiece W, to the inside 28 of the arm 22 while supporting the wire electrode 24. The lower guide block 20 includes a nozzle 20a.

The nozzle 20a is a member for jetting the clean working fluid LQ upward from the lower guide block 20. The working fluid LQ jetted from the nozzle 20a removes sludge resulting from the workpiece W being machined, from between the wire electrode 24 and the workpiece W.

Further, the wire electrode 24 and the workpiece W are heated by the electric discharge generated therebetween. The working fluid LQ jetted from the nozzle 20a cools the wire electrode 24 and the workpiece W.

The working fluid LQ jetted from the nozzle 20a of the lower guide block 20 is supplied to the nozzle 20a through a nozzle communication pipe 36 disposed in the inside 28 of the arm 22. The nozzle communication pipe 36 will be described later.

The nozzle for jetting the working fluid LQ may be provided not only in the lower guide block 20 but also in the upper guide block 18. However, the nozzle provided in the upper guide block 18 jets the working fluid LQ downward.

The arm 22 penetrates into the work pan 12 and supports the lower guide block 20 in the working fluid LQ. The arm 22 is installed on the column 11B. The work pan 12 has a wall 12a on the -Y direction side. A long hole that is long in the X direction is formed in the wall 12a. The arm 22 extends to the inside of the work pan 12 through the long hole.

The work pan 12 is provided with a seal member for preventing the working fluid LQ in the work pan 12 from leaking through a clearance between the long hole of the wall 12a and the arm 22. The seal member is not shown.

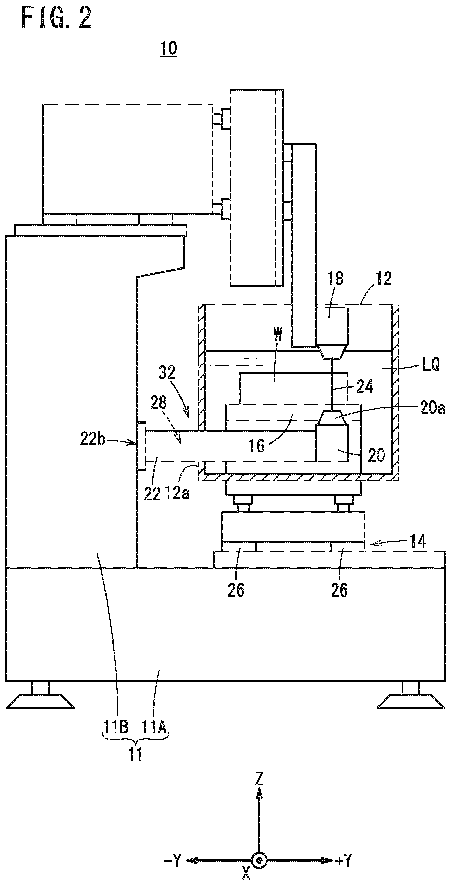

FIG. 2 is a view showing the wire electrical discharge machine 10 when the work pan 12 is moved to a position different from that in FIG. 1 by the driving of the drive mechanism 14. In FIG. 2, the slider 26 is located at the most -Y direction-side position within the movement range of the slider 26.

The relative positional relationship between the work pan 12 and the arm 22 changes in accordance with the movement of the work pan 12. For example, in a case where the work pan 12 moves in the Y direction, the relative positional relationship between the work pan 12 and the arm 22 in the Y direction changes.

In the following description, the relative positional relationship refers to the relative positional relationship between the work pan 12 and the arm 22 in the Y direction unless otherwise specified.

The proportion of a portion of the arm 22 that is positioned inside the work pan 12 changes in accordance with change in the relative positional relationship. It is noted that the arm 22 has a first portion 30 and a second portion 32, which will be described below.

The first portion 30 is a portion of the arm 22 that is always positioned inside the work pan 12 regardless of the change in the relative positional relationship. The first portion 30 is located within the work pan 12 when the slider 26 is located at the most +Y direction-side position within the movement range of the slider 26 (see also FIG. 1). The first portion 30 is immersed in the working fluid LQ in the work pan 12 by being positioned within the work pan 12. The first portion 30 includes a first end 22a of the arm 22 in the Y direction. The lower guide block 20 is attached to, for example, the first end 22a.

The second portion 32 is a portion of the arm 22 that is always positioned outside the work pan 12 regardless of the change in the relative positional relationship. The second portion 32 is located outside the work pan 12 when the slider 26 is located at the most -Y direction-side position within the movement range of the slider 26 (see also FIG. 2). The second portion 32 includes a second end 22b of the arm 22 in the Y direction. The second end 22b is fixed to the column 11B.

FIG. 3 is a diagram schematically showing the configuration of the wire electrical discharge machine 10 related to the arm 22.

The wire electrical discharge machine 10 further includes a wire pipe 34 and the nozzle communication pipe 36. The wire pipe 34 and the nozzle communication pipe 36 pass through the inside 28 of the arm 22 and penetrate the arm to be connected to the lower guide block 20.

The wire electrode 24 that has passed through the lower guide block 20 is passed through the wire pipe 34. The wire electrode 24 is guided, through the wire pipe 34, to a collection box installed outside the work pan 12. The collection box is not shown.

The nozzle communication pipe 36 connects the working fluid tank and the nozzle 20a. The working fluid tank is a tank that stores the working fluid LQ outside the work pan 12. The working fluid LQ in the working fluid tank flows through the nozzle communication pipe 36 toward the nozzle 20a. The working fluid tank is not shown.

The wire electrical discharge machine 10 may further include a pump that forcibly causes the working fluid LQ in the nozzle communication pipe 36 to flow toward the nozzle 20a. The pump is not shown.

The arm 22 further includes a working fluid introduction port 38, a working fluid discharge port 40, and an air vent 42. Each of the working fluid introduction port 38, the working fluid discharge port 40, and the air vent 42 is an opening that allows the inside 28 of the arm 22 to communicate with the outside thereof.

The working fluid introduction port 38 is formed in the first portion 30. The arm 22 has the working fluid introduction port 38, and thus the working fluid LQ in the work pan 12 can be taken into the inside 28 of the arm 22 through the working fluid introduction port 38.

Owing to the wire pipe 34, the working fluid LQ (LQ1) taken in through the working fluid introduction port 38 is separated from the wire electrode 24 disposed in the wire pipe 34. Owing to the nozzle communication pipe 36, the working fluid LQ1 is separated from the working fluid LQ (LQ2) that is in the nozzle communication pipe 36.

A filter 44 is preferably provided in the working fluid introduction port 38. The filter 44 filters the working fluid LQ passing through the working fluid introduction port 38. This prevents foreign matter such as sludge contaminating the working fluid LQ from entering the inside 28 of the arm 22.

The working fluid discharge port 40 is formed in the second portion 32. The working fluid discharge port 40 communicates with the working fluid introduction port 38 via the inside 28 of the arm 22. The working fluid LQ (LQ1) in the inside 28 of the arm 22 is discharged from the working fluid discharge port 40.

The wire pipe 34 may extend to the outside of the arm 22 through the working fluid discharge port 40. In this case, it is not necessary to form an opening dedicated for guiding the wire electrode 24 to the outside of the arm 22 separately from the working fluid discharge port 40, and thus the shape of the arm 22 is simplified.

The air vent 42 is an opening for releasing air A from the inside 28 of the arm 22. The air vent 42 is connected to an air tube 48 disposed outside the arm 22 via, for example, a tube fitting 46.

The air vent 42 is preferably formed in the second portion 32. Thus, the air vent 42 is not positioned inside the work pan 12 regardless of the change in the relative positional relationship. Therefore, for example, the air tube 48 connected to the air vent 42 is prevented from interfering with the wire electrode 24, the workpiece W, and the like in the work pan 12.

The second portion 32 is outside the range of the relative movement of the wall 12a of the work pan 12 relative to the arm 22. Therefore, formation of the air vent 42 in the second portion 32 prevents the air tube 48 connected to the air vent 42 from interfering with the wall 12a.

According to the present embodiment, the temperature of the portion of the arm 22 positioned inside the work pan 12 is a temperature corresponding to the liquid temperature of the working fluid LQ inside the work pan 12. The working fluid LQ in the work pan 12 is taken into the inside 28 of the arm 22. The taken-in working fluid LQ1 also flows into a portion of the inside 28 of the arm 22 that is positioned outside the work pan 12. As a result, the temperature of the portion of the arm 22 located outside the work pan 12 is adjusted to a temperature corresponding to the liquid temperature of the working fluid LQ1.

That is, the temperature of the entire arm 22 is adjusted in accordance with the liquid temperature of the working fluid LQ in the work pan 12. As a result, for example, during electrical discharge machining, the temperature of the entire arm 22 is made uniform at a temperature corresponding to the liquid temperature of the working fluid LQ in the work pan 12.

Since the temperature of the entire arm 22 during electrical discharge machining is made uniform, even if the proportion of the portion of the arm 22 that is located in the work pan 12 changes during the electrical discharge machining, the length of the arm 22 is prevented from varying. Since such variation in the length of the arm 22 is suppressed during the electrical discharge machining, the machining accuracy is improved.

According to the present embodiment, the working fluid discharge port 40 is formed in the second end 22b of the second portion 32. Thus, the working fluid LQ1 flows through the inside 28 of the arm 22 to the second end 22b. The temperature of the entire second portion 32 is made more uniform by the working fluid LQ1 flowing to the second end 22b. Therefore, the change in the length of the arm 22 is further suppressed.

Furthermore, according to the present embodiment, air A can be released from the inside 28 of the arm 22 via the air vent 42. By removing the air A from the inside 28 of the arm 22, the inside 28 of the arm 22 can be filled with a larger amount of the working fluid LQ1. The temperature of the entire arm 22 is made more uniform by filling the inside 28 of the arm 22 with a larger amount of the working fluid LQ1. Therefore, the variation in the length of the arm 22 is further prevented.

The working fluid LQ1 is working fluid LQ heated by electric discharge generated in the work pan 12. In contrast, the working fluid LQ2 flowing through the nozzle communication pipe 36 is preferably as low in temperature as possible in order to cool the wire electrode 24 and the workpiece W.

In view of this, it is preferable that the nozzle communication pipe 36 should have high heat insulation properties. The high heat insulation of the nozzle communication pipe 36 can prevent heat exchange between the working fluid LQ1 flowing through the inside 28 of the arm 22 and the working fluid LQ2 flowing through the nozzle communication pipe 36. This prevents the working fluid LQ2 from being warmed by the working fluid LQ1.

### [Modifications]

Modifications of the above-described embodiments will be described below. However, explanations that overlap with those of the embodiment will be omitted insofar as possible in the following description. Elements that have been described in the above embodiment are denoted by the same reference numerals as in the above embodiment unless otherwise specified.

### (Modification 1)

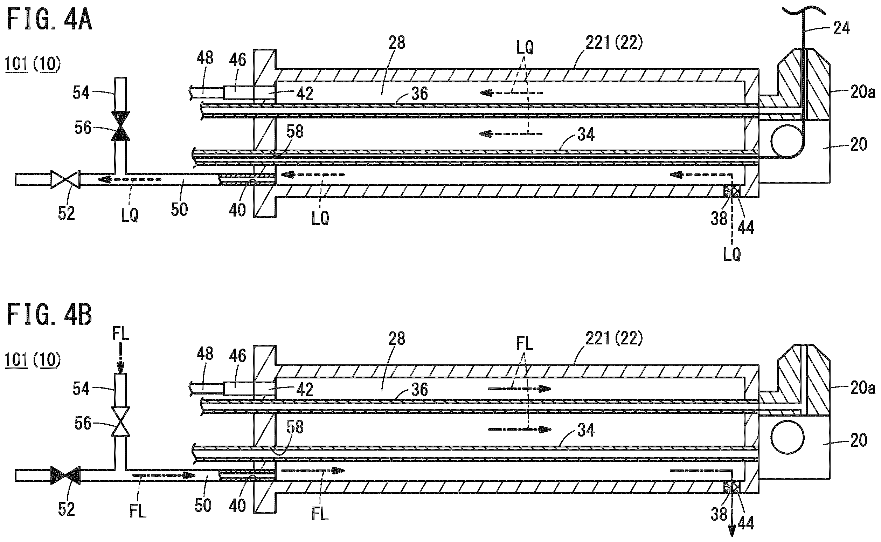

FIG. 4A is a configuration diagram of a wire electrical discharge machine 101 (10) according to a first modification. However, the illustration of the elements already described in the embodiment will be omitted as much as possible.

The wire electrical discharge machine 101 has the same constituent elements as the wire electrical discharge machine 10 (see also the embodiment). However, the wire electrical discharge machine 101 includes an arm 221 obtained by modifying the arm 22. The arm 221 is different from the arm 22 in that the arm 221 further includes a wire discharge port 58 described later.

The wire electrical discharge machine 101 further includes a first pipe 50, a first valve 52, a second pipe 54, and a second valve 56. The first pipe 50, the first valve 52, the second pipe 54, and the second valve 56 are disposed outside the arm 221.

The first pipe 50 is connected to the working fluid discharge port 40. Thus, the working fluid LQ in the inside 28 of the arm 221 flows through the working fluid discharge port 40 into the first pipe 50.

The first valve 52 is provided in the first pipe 50. When the first valve 52 is opened, the working fluid LQ that has flowed from the working fluid introduction port 38 to the inside 28 of the arm 221 is discharged from the first pipe 50. The first valve 52 shown in white in FIG. 4A is in an open state.

The second pipe 54 is connected to the first pipe 50 between the first valve 52 and the working fluid discharge port 40. The second pipe 54 is a pipe through which fluid FL for cleaning the inside 28 of the arm 221 flows (see FIG. 4B). The fluid FL is, for example, a clean working fluid LQ or clean air.

The second valve 56 is provided in the second pipe 54. The second valve 56 is closed while the working fluid LQ is being discharged from the working fluid discharge port 40. The second valve 56 shown in black in FIG. 4A is in a closed state.

Here, if the wire pipe 34 is passed through the working fluid discharge port 40 as in the embodiment, the wire pipe 34 extends into the first pipe 50. In this case, the opening and closing of the first valve 52 may be hindered by the wire pipe 34 in the first pipe 50. The wire pipe 34 can be removed before the first valve 52 is closed, but this requires a lot of time and labor.

In view of this, the arm 221 has the wire discharge port 58. The wire discharge port 58 is an opening formed in the second portion 32. The wire discharge port 58 is formed at a location different from the working fluid discharge port 40. The wire pipe 34 is passed through the wire discharge port 58, not the working fluid discharge port 40. Thus, the opening and closing of the first valve 52 is not hindered by the wire pipe 34. Therefore, it is not necessary to remove the wire pipe 34 when closing the first valve 52.

FIG. 4B is a diagram showing the flow of the fluid FL when the second valve 56 is opened. As in FIG. 4A, the illustration of the elements already described in the embodiment is omitted as much as possible.

The second valve 56 is opened when the working fluid LQ is not discharged from the working fluid discharge port 40. The second valve 56 shown in white in FIG. 4B is in an open state.

When the second valve 56 is opened, the fluid FL flows into the first pipe 50 through the second pipe 54. A pump may be provided in the second pipe 54. The pump forcibly causes the fluid FL to flow toward the first pipe 50 while the second valve 56 is in an open state.

The fluid FL that has flowed into the first pipe 50 passes through the working fluid discharge port 40 and flows into the inside 28 of the arm 221. The fluid FL that has flowed into the inside 28 of the arm 221 is discharged from the working fluid introduction port 38 together with dirt and the like that are present in the inside 28 of the arm 221. Thus, the inside 28 of the arm 221 is cleaned.

When the second valve 56 is opened, the first valve 52 is preferably closed. By doing this, the fluid FL can be more reliably flowed toward the inside 28 of the arm 221. The first valve 52, which is shown in black in FIG. 4B, is in a closed state.

### (Modification 2)

The working fluid introduction port 38 may be formed at a location other than the lower portion of the first portion 30. For example, the working fluid introduction port 38 may be formed in an upper portion or a side portion of the first portion 30.

### (Combination of Plurality of Modifications)

The above-described modifications may be appropriately combined within a range in which no technical inconsistencies occur.

### [Invention Obtained from Embodiments]

The invention that can be grasped from the above-described embodiment and modifications will be described below.

An aspect of the present invention is characterized by the wire electrical discharge machine (10) for machining the workpiece (W) by generating electric discharge between the workpiece and the wire electrode (24) in the working fluid (LQ), the wire electrical discharge machine including: the work pan (12) configured to store the working fluid and accommodate the workpiece; the arm (22) having a hollow shape and that penetrates into the work pan, wherein the wire electrode is passed through the arm in order for the wire electrode that has passed through the workpiece to be guided to the outside of the work pan; the drive mechanism (14) configured to change the relative positional relationship between the work pan and the arm at least in the extending direction of the arm; the working fluid introduction port (38) formed in the first portion (30) of the arm, the first portion being positioned inside the work pan regardless of change in the relative positional relationship in the extending direction, the working fluid introduction port being configured to guide the working fluid to the inside (28) of the arm; and the working fluid discharge port (40) formed in the second portion (32) of the arm, the second portion being positioned outside the work pan regardless of change in the relative positional relationship in the extending direction, the working fluid discharge port being configured to discharge, to the outside of the arm, the working fluid that has entered from the working fluid introduction port.

With this configuration, the temperature of the entire arm is adjusted in accordance with the liquid temperature of the working fluid in the work pan, and therefore, the length of the arm is prevented from varying during electrical discharge machining.

The wire electrical discharge machine may further include the air vent (42) configured to release air (A) that has entered the inside of the arm from the working fluid introduction port or the working fluid discharge port. This makes it possible to fill the inside of the arm with a larger amount of the working fluid.

The wire electrical discharge machine may further include the filter (44) configured to prevent sludge from entering the inside of the arm from the working fluid introduction port. This prevents the inside of the arm from being contaminated by sludge.

The wire electrical discharge machine may further include the first pipe (50) through which the working fluid discharged from the working fluid discharge port flows; the first valve (52) provided in the first pipe; the second pipe (54) connected to the first pipe between the working fluid discharge port and the first valve, wherein the fluid (FL) for cleaning the inside of the arm flows through the second pipe toward the first pipe; and the second valve (56) provided in the second pipe. Thus, the inside of the arm can be cleaned by the fluid.

### Reference Signs List

10, 101: wire electrical discharge machine
12: work pan
14: drive mechanism
22, 221: arm
24: wire electrode
28: inside of arm
30: first portion
32: second portion
38: working fluid introduction port
40: working fluid discharge port
42: air vent
44: filter
50: first pipe
52: first valve
54: second pipe
56: second valve
FL: fluid
LQ: working fluid
W: workpiece

## Claims

1. A wire electrical discharge machine (10) for machining a workpiece (W) by generating electric discharge between the workpiece and a wire electrode (24) in a working fluid (LQ), the wire electrical discharge machine comprising:
a work pan (12) configured to store the working fluid and accommodate the workpiece;
an arm (22) having a hollow shape and that penetrates into the work pan, wherein the wire electrode is passed through the arm in order for the wire electrode that has passed through the workpiece to be guided to an outside of the work pan;
a drive mechanism (14) configured to change a relative positional relationship between the work pan and the arm at least in an extending direction of the arm;
a working fluid introduction port (38) formed in a first portion (30) of the arm, the first portion being positioned inside the work pan regardless of change in the relative positional relationship in the extending direction, the working fluid introduction port being configured to guide the working fluid to an inside (28) of the arm; and
a working fluid discharge port (40) formed in a second portion (32) of the arm, the second portion being positioned outside the work pan regardless of change in the relative positional relationship in the extending direction, the working fluid discharge port being configured to discharge, to an outside of the arm, the working fluid that has entered from the working fluid introduction port.

2. The wire electrical discharge machine according to claim 1, further comprising:
an air vent (42) configured to release air (A) that has entered the inside of the arm from the working fluid introduction port or the working fluid discharge port.

3. The wire electrical discharge machine according to claim 1 or 2, further comprising:
a filter (44) configured to prevent sludge from entering the inside of the arm from the working fluid introduction port.

4. The wire electrical discharge machine according to any one of claims 1 to 3, further comprising:
a first pipe (50) through which the working fluid discharged from the working fluid discharge port flows;
a first valve (52) provided in the first pipe;
a second pipe (54) connected to the first pipe between the working fluid discharge port and the first valve, wherein a fluid (FL) for cleaning the inside of the arm flows through the second pipe toward the first pipe; and
a second valve (56) provided in the second pipe.
